# EUROPÄISCHE PATENTANMELDUNG

(11) **EP 1 837 150 A1**
(43) Veröffentlichungstag der Anmeldung: **26.09.2007**
(21) Anmeldenummer: 07000845.3
(22) Anmeldetag: 17.01.2007
(51) Int. Cl.: B29C 45/16, B65D 47/08

(54) **Vorrichtung zum Herstellen von Behälterverschlüssen im Zweikomponenten-Kunstoffspritzguss**

(30) Priorität: 20.03.2006 DE 102006013122
(71) Anmelder: Georg Menshen GmbH + Co. KG, D-57413 Finnentrop (DE)
(72) Erfinder: Kebben, Markus, 57399 Kirchhundem (DE); Heukamp, Wolfgang, 53913 Swisttal (DE); Römer, Frank, 57413 Finnentrop (DE)
(74) Vertreter: Cohausz, Helge B.

(57) **Zusammenfassung**

Die Erfindung betrifft eine Vorrichtung zum Herstellen von Behälterverschlüssen im Zweikomponenten-Kunststoffspritzguss, wobei der Verschluss einen auf dem Behälter befestigbaren Verschlusskörper aus einem ersten Kunststoff und einen an dem Verschlusskörper angelenkten Deckel (2) aus einem zweiten Kunststoff zum Verschließen einer oberen Öffnung im Verschlusskörper aufweist, wobei das Gelenk ein mittleres, ein Filmscharnier bildendes Gelenkband (4) aufweist, das mit seinem oberen Ende am Deckel (2) insbesondere am Deckelrand (3) und mit seinem unteren Ende an einem vom zweiten Kunststoff gebildeten, im ersten Kunststoff des Verschlusskörpers eingespritzten Lagerteil (6) angeformt ist, wobei auf einer oder zu beiden Seiten des Gelenkbandes (4) ein Spannband (7) mit dem oberen Ende am Deckel (2) insbesondere am Deckelrand (3) und mit dem unteren Ende an einem vom zweiten Kunststoff gebildeten, im ersten Kunststoff des Verschlusskörpers eingespritzten Lagerteil angeformt ist, und wobei ein Schieber vorgesehen ist, der während des Einspritzens des ersten Kunststoffs des Verschlusskörpers die Räume für das Lagerteil (8) und insbesondere für das Gelenkband und für die Spannbänder ausfüllt und vor dem Einspritzen des zweiten Kunststoffs ziehbar ist, so dass in dieser zweiten Stellung des Schiebers (9) die Räume (6,8) für den zweiten Kunststoff frei sind, wobei der Schieber (9) oder ein zusätzlicher Schieber mindestens einen Vorsprung (11) aufweist, der in der zweiten Stellung des Schiebers (9) den Raumbereich des Lagerteils, an dem das Gelenkband (4) angeformt ist, von dem Raumbereich des Lagerteils trennt (8), an dem das Spannband (7) angeformt ist.

## Beschreibung

Die Erfindung betrifft eine Vorrichtung zum Herstellen von Behälterverschlüssen im Zweikomponenten-Kunststoffspritzguss, wobei der Verschluss einen auf dem Behälter befestigbaren Verschlusskörper aus einem ersten Kunststoff und einen an dem Verschlusskörper angelenkten Deckel aus einem zweiten Kunststoff zum Verschließen einer oberen Öffnung im Verschlusskörper aufweist, wobei das Gelenk ein mittleres, ein Filmscharnier bildendes Gelenkband aufweist, das mit seinem oberen Ende am Deckel insbesondere am Deckelrand und mit seinem unteren Ende an einem vom zweiten Kunststoff gebildeten, im ersten Kunststoff des Verschlusskörpers eingespritzten Lagerteil angeformt ist, wobei auf einer oder zu beiden Seiten des Gelenkbandes ein Spannband mit dem oberen Ende am Deckel insbesondere am Deckelrand und mit dem unteren Ende an einem vom zweiten Kunststoff gebildeten, im ersten Kunststoff des Verschlusskörpers eingespritzten Lagerteil angeformt ist, und wobei ein Schieber vorgesehen ist, der während des Einspritzens des ersten Kunststoffs des Verschlusskörpers die Räume für das Lagerteil und insbesondere für das Gelenkband und für die Spannbänder ausfüllt und vor dem Einspritzen des zweiten Kunststoffs ziehbar ist, so dass in dieser zweiten Stellung des Schiebers die Räume für den zweiten Kunststoff frei sind.

Bei diesem bekannten Herstellungsverfahren hat es sich gezeigt, dass beim Einspritzen des zweiten, den Deckel bildenden Kunststoffs der Kunststoff zumindest bei einem der beiden Spannbänder aus zwei Richtungen in den Raum für das Spannband einfließt, wobei eine Kunststoffmenge direkt über den Deckel und eine zweite Kunststoffmenge über das Gelenkband diesen Raum erreicht. Damit treffen sich die zwei Kunststoffmengen innerhalb dieses Raums bzw. dieses Spannbandes, so dass das Spannband an der Stelle des Zusammentreffens eine Bindenaht bildet, die zu einem Reißen oder Brechen beim Gebrauch des Verschlusses neigt.

Aufgabe der Erfindung ist, eine Vorrichtung der eingangs genannten Art so zu verbessern, dass in dem für das Spannband vorgesehenen Raum der Kunststoff nur von einer Seite her eindringen kann.

Diese Aufgabe wird erfindungsgemäß dadurch gelöst, dass der Schieber oder ein zusätzlicher Schieber mindestens einen Vorsprung aufweist, der in der zweiten Stellung des Schiebers den Raumbereich des Lagerteils, an dem das Gelenkband angeformt ist, von dem Raumbereich des Lagerteils trennt, an dem das Spannband angeformt ist.

Der Vorsprung (insbesondere die Vorsprünge) sorgt dafür, dass in der zweiten Stellung des Schiebers, in der der zweite Kunststoff für den Deckel eingespritzt wird, der Raum für das Gelenkband einschließlich dessen Raum für das Lagerteil von dem Raum für das Spannband (insbesondere die Spannbänder) einschließlich dem Raum für das Lagerteil des Spannbandes voneinander getrennt sind, so dass beim Einspritzen des Kunststoffs der Kunststoff nur noch über den Raum für den Deckel und nicht über den Raum für das Gelenkband bzw. für das Lagerteil des Lenkbandes in den Raum des Spannbandes eindringen kann. Damit wird sicher verhindert, dass sich innerhalb des Spannbandes eine Bindenaht bildet, die zu einem Reißen oder Brechen des Spannbandes während des Gebrauchs führen kann.

Vorteilhafte Ausgestaltungen der Erfindung sind in den Unteransprüchen aufgeführt.

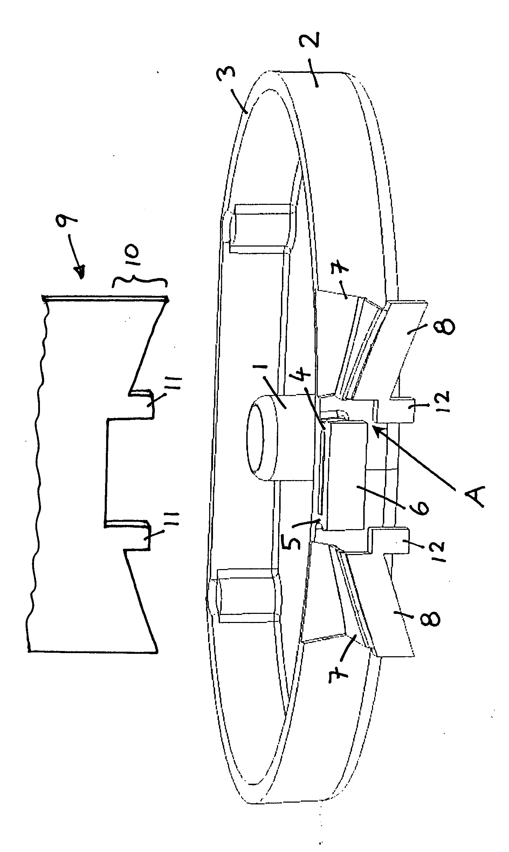

Ein Ausführungsbeispiel eines erfindungsgemäßen Deckels einschließlich dem unteren Ende eines Schiebers ist in der Zeichnung dargestellt und wird im Folgenden näher beschrieben.

Zum Verschließen des oberen Stutzens eines nicht dargestellten Behälters wird auf den Stutzen ein nicht dargestellter Verschlusskörper aufgeschoben insbesondere aufgeschraubt, wobei der Verschlusskörper an seinem oberen Ende eine kleine Entnahmeöffnung besitzt, die durch einen Stutzen 1 verschließbar ist, der an der Innenseite eines am Verschlusskörper angelenkten Deckels 2 mittig nach unten vorstehend angeformt ist.

Der Deckel 2 ist in der Zeichnung im geöffneten Zustand dargestellt, so dass der Deckel mit seiner Unterseite nach oben liegt. An dem am Deckel 2 außen umlaufenden Rand 3 ist ein Gelenkband 4 außen angeformt, das ein Filmscharnier 5 bildet und mit seinem äußeren Rand an einem Lagerteil 6 angeformt ist, das in den Kunststoff des nicht dargestellten Verschlusskörpers an- bzw. eingeformt ist. Ferner sind zu beiden Seiten des Gelenkbandes 4 je ein Spannband 7 am Rand des Deckels 2 angeformt, die mit ihren dem Deckel 2 abgewandten Enden an Lagerteilen 8 jeweils angeformt sind, die in den Kunststoff des Verschlusskörpers an- bzw. eingeformt sind.

Damit sind die Lagerteile 6 und 8 unbeweglich im Kunststoff des Verschlusskörpers gehalten und während des Verschwenkens des Deckels 2 erfolgen nur Bewegungen des Filmscharniers 5 und der zwei Spannbänder 7. Zwischen den Spannbändern mit ihren Lagerteilen 8 und dem Filmscharnier 5 mit seinem Lagerteil 6 besteht keine Verbindung.

Um eine solche Konstruktion eines Verschlusskörpers mit Deckel 2 in einer Zweikomponenten-Kunststoffspritzvorrichtung herzustellen, weist die Vorrichtung einen Schieber 9 auf, dessen unterer Bereich 10 die Räume in der Spritzgussform für die Lagerteile 6 und 8 vollständig ausfüllt, wenn er sich in der unteren Stellung befindet, während der erste Kunststoff für den Verschlusskörper eingespritzt wird. Hierbei weist der Schieber 9 zwei untere Vorsprünge 11 auf, die stabförmig und zueinander parallel nach unten vorstehen und hierbei in der unteren ersten Stellung zwei kleinere Räume 12 ausfüllen.

Nach dem Einspritzen des ersten Kunststoffs und damit der Fertigstellung des Verschlusskörpers wird der Schieber um einige Millimeter in eine zweite Stellung angehoben und damit die Vorsprünge 11 aus den Räumen 12 herausgezogen. In dieser Stellung gibt der Schieber 9 auch die Räume für die Lagerteile 6 und 8 frei. In dieser zweiten Stellung liegen die Vorsprünge 11 zwischen den Lagerteilen 6 und 8 und sorgen dafür, dass keine Verbindung zwischen diesen Lagerteilen besteht, so dass während des Einspritzens des zweiten Kunststoffs in den Deckel 2 und in die Räume für die Lagerteile 6 und 8 der zweite Kunststoff das Lagerteil 6 und den Raum für das Spannband nur über den Rand 3 erreichen kann. Damit kann der Kunststoff in die Spannbänder 7 nur über den Deckelrand 3 und nicht über den Raum für das Lagerteil 6 fließen. Der Pfeil A weist auf eine der beiden Trennstellen hin, die zwischen den Räumen für die Lagerteile 6 und 8 durch die Vorsprünge 11 geschaffen werden.

Im Ausführungsbeispiel haben die zueinander und zur Schieberichtung parallelen Vorsprünge 11 jeweils die Form eines länglichen Quaders. Sie können aber auch auf andere Weise länglich geformt sein, solange sie in der zweiten Stellung des Schiebers 9 den Raum des Lagerteils 6 von den Räumen der Lagerteile 8 und der Spannbänder 7 trennen.

In nicht dargestellten Ausführungen ist der Schieber 9 in zwei oder mehrere zueinander parallele Schieberteile aufgeteilt. So können die Vorsprünge 11 und/oder die seitlichen Bereiche von einzelnen Schieberteilen gebildet sein.

Ferner kann statt des von oben hinein fahrenden Schiebers ein waagerechter, nicht dargestellter Schieber mit Vorsprüngen entsprechend den Vorsprüngen 11 in die Räume 12 fahren, um beim Einspritzen des zweiten Kunststoffs die Räume 6 und 8 voneinander zu trennen.

## Patentansprüche

1. Vorrichtung zum Herstellen von Behälterverschlüssen im Zweikomponenten-Kunststoffspritzguss,
- wobei der Verschluss einen auf dem Behälter befestigbaren Verschlusskörper aus einem ersten Kunststoff und einen an dem Verschlusskörper angelenkten Deckel (2) aus einem zweiten Kunststoff zum Verschließen einer oberen Öffnung im Verschlusskörper aufweist,
- wobei das Gelenk ein mittleres, ein Filmscharnier bildendes Gelenkband (4) aufweist, das mit seinem oberen Ende am Deckel (2) insbesondere am Deckelrand (3) und mit seinem unteren Ende an einem vom zweiten Kunststoff gebildeten, im ersten Kunststoff des Verschlusskörpers eingespritzten Lagerteil (6) angeformt ist,
- wobei auf einer oder zu beiden Seiten des Gelenkbandes (4) ein Spannband (7) mit dem oberen Ende am Deckel (2) insbesondere am Deckelrand (3) und mit dem unteren Ende an einem vom zweiten Kunststoff gebildeten, im ersten Kunststoff des Verschlusskörpers eingespritzten Lagerteil (8) angeformt ist, und
- wobei ein Schieber (9) vorgesehen ist, der während des Einspritzens des ersten Kunststoffs des Verschlusskörpers die Räume für das Lagerteil (6, 8) und insbesondere für das Gelenkband und für die Spannbänder ausfüllt und vor dem Einspritzen des zweiten Kunststoffs ziehbar ist, so dass in dieser zweiten Stellung des Schiebers (9) die Räume für den zweiten Kunststoff frei sind,
**dadurch gekennzeichnet, dass** der Schieber oder ein zusätzlicher Schieber mindestens einen Vorsprung (11) aufweist, der in der zweiten Stellung des Schiebers (9) den Raumbereich des Lagerteils (6), an dem das Gelenkband (4) angeformt ist, von dem Raumbereich des Lagerteils (8) trennt, an dem das Spannband (7) angeformt ist.

2. Vorrichtung nach Anspruch 1, **dadurch gekennzeichnet, dass** der Schieber (9) zwei Vorsprünge (11) aufweist, die in der zweiten Stellung die Raumbereiche des Lagerteils voneinander trennen.

3. Vorrichtung nach Anspruch 1 oder 2, **dadurch gekennzeichnet, dass** der Vorsprung/die Vorsprünge (11) stabförmig und parallel zur Bewegungsrichtung des Schiebers (9) am Schieber vorsteht/vorstehen.

4. Vorrichtung nach Anspruch 2 oder 3, **dadurch gekennzeichnet, dass** die Vorsprünge (11) zueinander parallel angeordnet sind.

5. Vorrichtung nach einem der vorherigen Ansprüche, **dadurch gekennzeichnet, dass** der Vorsprung/die Vorsprünge (11) die Form eines länglichen Quaders besitzen.

6. Vorrichtung nach einem der vorherigen Ansprüche, **dadurch gekennzeichnet, dass** der Schieber (9) aus zwei oder mehr einzelnen, in derselben Richtung verschieblichen Teilen besteht.

7. Vorrichtung nach Anspruch 6, **dadurch gekennzeichnet, dass** der oder die Vorsprünge (11) jeweils von einem Schieberteil gebildet sind.

8. Vorrichtung nach Anspruch 6 oder 7, **dadurch gekennzeichnet, dass** für das oder die Spannbänder (7) und dessen Lagerteilen (8) jeweils ein getrenntes Schieberteil besteht.

9. Vorrichtung nach einem der vorherigen Ansprüche, **dadurch gekennzeichnet, dass** ein waagerechter Schieber mit Vorsprüngen (11) zwischen dem Raumbereich des Lagerteils (6), an dem das Gelenkband (4) angeformt ist und dem Raumbereich des Lagers (8), an dem das Spannband (7) angeformt ist, fahrbar ist, um diese voneinander zu trennen.
